# EUROPEAN PATENT APPLICATION

(11) **EP 4 796 985 A1**
(43) Date of publication of application: **26.08.2026**
(21) Application number: 24887743.3
(22) Date of filing: 22.10.2024
(51) Int. Cl.: G02F 1/025, G02F 1/015

(54) **SILICON-BASED ELECTRO-OPTIC PHASE MODULATOR, CHIP, AND RELATED SYSTEM**

(30) Priority: 06.11.2023 CN 202311470490
(71) Applicant: HUAWEI TECHNOLOGIES CO., LTD., Shenzhen 518129 (CN)
(72) Inventor: TAO, Yuansheng, Shenzhen, Guangdong 518129 (CN); WEI, Juan, Shenzhen, Guangdong 518129 (CN); LOU, Yannian, Shenzhen, Guangdong 518129 (CN)
(74) Representative: Pfenning, Meinig & Partner mbB
(86) International application number: PCT/CN2024/126322
(87) International publication number: WO 2025/098130

(57) **Abstract**

A silicon-based electro-optic phase modulator, a chip, and an electro-optic phase modulation system are provided. The silicon-based electro-optic phase modulator includes a substrate (10), and an optical waveguide layer (20) and an electrode layer (30) that are stacked on the substrate (10). The optical waveguide layer includes a first doped region (21), and a first PN junction (22) and a second PN junction (23) that are connected in series. The electrode layer (30) includes a first electrode (31), a second electrode (32), and a third electrode (33). The first PN junction (22) is of a convex structure. One end of the first PN junction (22) is connected to the first doped region (21), and the other end is connected to the second PN junction (23). A carrier doping concentration in the first PN junction (22) is lower than a carrier doping concentration in the second PN junction (23), and is also lower than a carrier doping concentration in the first doped region (21). The first doped region (21) is connected to the first electrode (31). An end that is of the second PN junction (23) and that is away from the first PN junction (22) is connected to the second electrode (32), and an end that is close to the first PN junction (22) is connected to the third electrode (33). The first electrode (31) and the second electrode (32) are respectively configured to receive a radio frequency signal and to be grounded, and the third electrode (33) is configured to receive a direct current bias voltage. This technical solution can reduce static power consumption and packaging costs of the silicon-based electro-optic phase modulator.

## Description

This application claims priority to Chinese Patent Application No. 202311470490.7, filed with the China National Intellectual Property Administration on November 6, 2023 and entitled "SILICON-BASED ELECTRO-OPTIC PHASE MODULATOR, CHIP, AND RELATED SYSTEM", which is incorporated herein by reference in its entirety.

### TECHNICAL FIELD

This application relates to the field of chip technologies, and in particular, to a processing unit scheduling apparatus, a method, a chip, and a related device.

### BACKGROUND

A microwave photonics technology uses optoelectronic devices to process microwave signals, has advantages such as a large bandwidth, a low loss, and anti-electromagnetic interference, and may be applied to fields such as wireless communication, radar, and instruments and meters. The microwave photonics technology is an emerging technology for implementing leapfrog improvement of a system capacity and bandwidth. In particular, a silicon-based microwave photonics technology can greatly reduce system costs, reduce operating power consumption, and improve stability, to promote industrialization of the microwave photonics technology.

A silicon-based electro-optic phase modulator (Electro-optic phase modulator, EOPM) may modulate phase information of an optical wave when implementing conversion from an electrical signal to an optical signal, and may further convert phase modulation into intensity modulation by using an optical link design, so that the silicon-based electro-optic phase modulator is more flexibly used, has more diversified functions, and is more widely used in the silicon-based microwave photonics technology. However, after a direct current bias voltage and a radio frequency signal are combined and then loaded together to a traveling wave electrode of the EOPM device, the direct current bias voltage drops across a termination matched resistor (a resistance value is usually 50 ohms) of the EOPM device, and a direct current is generated. This brings static electrical power consumption to an entire system. In addition, because the current direct current bias voltage and the radio frequency signal are combined and then loaded to the traveling wave electrode of the EOPM device, each silicon-based electro-optic phase modulator needs to be driven by using a separate bias-tee (Bias-Tee). Because each antenna element needs to correspond to one silicon-based electro-optic phase modulator, in an application scenario in which there are a large quantity of antenna elements, in other words, a large quantity of EOPM devices are needed, existence of the bias-tee significantly increases electrical packaging costs of the system.

Therefore, how to reduce the static power consumption and the packaging costs of the EOPM device is an urgent technical problem to be resolved.

### SUMMARY

Embodiments of this application provide a silicon-based electro-optic phase modulator, a chip, and a related system, to reduce static power consumption and packaging costs of a silicon-based electro-optic phase modulator.

According to a first aspect, an embodiment of this application provides a silicon-based electro-optic phase modulator. The silicon-based electro-optic phase modulator includes a substrate, and an optical waveguide layer and an electrode layer that are stacked on the substrate. The optical waveguide layer includes a first doped region, and a first PN junction and a second PN junction that are connected in series. The electrode layer includes a first electrode, a second electrode, and a third electrode. The first PN junction is of a convex structure, one end of the first PN junction is connected to the first doped region, the other end of the first PN junction is connected to the second PN junction, and a carrier doping concentration in the first PN junction is lower than a carrier doping concentration in the second PN junction, and is lower than a carrier doping concentration in the first doped region. The first doped region is connected to the first electrode, and an end that is of the second PN junction and that is away from the first PN junction is connected to the second electrode, where the first electrode is configured to receive a radio frequency signal, and the second electrode is configured to be grounded; or the first electrode is configured to be grounded, and the second electrode is configured to receive a radio frequency signal. An end that is of the second PN junction and that is close to the first PN junction is connected to the third electrode, and the third electrode is configured to receive a direct current bias voltage.

A current silicon-based electro-optic phase modulator has high packaging costs, generates additional static electrical power consumption, and wastes resources. Therefore, an embodiment of this application provides a silicon-based electro-optic phase modulator, to reduce the static power consumption and the packaging costs of the EOPM device. Specifically, the silicon-based electro-optic phase modulator includes the substrate, and the optical waveguide layer and the electrode layer that are stacked on the substrate. The optical waveguide layer includes a high-concentration doped region (namely, the first doped region) and two PN junctions that are connected in series, namely, the first PN junction and the second PN junction. One of the two PN junctions is a low-concentration doped convex PN junction (for example, the first PN junction), and the other is a high-concentration doped PN junction (for example, the second PN junction). The other end of the low-concentration doped convex PN junction is further connected to the high-concentration doped region (for example, the first doped region). Outer sides (namely, the first doped region and the end that is of the second PN junction and that is away from the first PN junction) of the two PN junctions are respectively connected to a signal electrode used to input the radio frequency signal and a grounded ground electrode at an upper electrode layer. Because the two PN junctions are in a series connection relationship, and in a reverse bias state, a capacitance value of the high-concentration doped PN junction is far greater than a capacitance value of the low-concentration doped PN junction, most of the voltage acts on the low-concentration doped PN junction (namely, the first PN junction, that is, an effective electro-optic modulation region). In this way, the first PN junction can effectively adjust and control phase information of an optical carrier under a driving action of the input radio frequency signal, and generate an optical modulation sideband. An electrode (for example, the third electrode) that is connected to the upper electrode layer and that is used to provide a reverse direct current bias voltage is disposed in a middle region in which the two PN junctions are connected, that is, the end that is of the second PN junction and that is close to the first PN junction, so that a carrier in the first PN junction is pulled out of a silicon waveguide region under an action of an applied electric field, to reduce a carrier-induced absorption loss of the optical carrier, reduce a capacitance/resistance of the first PN junction, and ensure a low insertion loss and a high modulation bandwidth of the device. In addition, an input of the direct current bias voltage and an input of the radio frequency signal respectively act on two ends of the first PN junction by using two different electrodes, so that the direct current bias voltage is not applied to a termination resistor of the silicon-based electro-optic phase modulator, to greatly reduce the static power consumption. Therefore, the silicon-based electro-optic phase modulator provided in this embodiment of this application can be driven by using a few direct current bias currents to achieve effective electro-optic modulation. Further, the direct current bias voltage and the radio frequency signal are separately input, so that the second PN junction may be used solely as a diode, a function of passing an alternating current and blocking a direct current may be implemented by using a capacitive characteristic exhibited by the second PN junction after a reverse bias voltage is applied, and a function of passing the direct current and blocking the alternating current may be implemented by using an inductive characteristic exhibited by a narrow metal trace of the third electrode. That is, a function of a bias-tee is directly implemented on a silicon chip. In this way, each silicon-based electro-optic phase modulator may not need to be driven by using an additional separate external electrical bias-tee, to reduce the packaging costs of the device.

In a possible implementation, the first doped region and an end that is of the first PN junction and that is close to the first doped region are of a first doping type, and an end that is of the first PN junction and that is close to the second PN junction is of the second doping type. The end that is of the second PN junction and that is close to the first PN junction is of the second doping type, and the end that is of the second PN junction and that is away from the first PN junction is of the first doping type.

In this embodiment of this application, doping types of the first PN junction and a connection point with the second PN junction are the same, and doping types of the first PN junction and a connection point with the first doped region are also the same. When the first doping type is a P type, the second doping type is an N type; or when the first doping type is an N type, the second doping type is a P type. In addition, an operating manner of the silicon-based electro-optic phase modulator in this embodiment of this application is a carrier depletion manner. To be specific, the direct current bias voltage is applied to the third electrode, so that a PN junction of the silicon-based electro-optic phase modulator is in a reverse bias state. In addition, in the reverse bias state, the first PN junction is the effective electro-optic modulation region, and the second PN junction is a diode capacitance region. Therefore, based on different types of carrier doping of a connection point of the third electrode at the optical waveguide layer, polarity of applied direct current bias voltages in this embodiment of this application is also different.

In a possible implementation, the first PN junction includes a ridge region, a first plate region, and a second plate region. One end of the ridge region is connected to the first plate region, and the other end of the ridge region is connected to the second plate region. An end that is of the first plate region and that is away from the ridge region is connected to the first doped region, and an end that is of the second plate region and that is away from the ridge region is connected to the second PN junction.

In this embodiment of this application, the first PN junction is of the convex structure, and a protrusion part is the ridge region of the first PN junction. The ridge region is a ridge silicon optical waveguide region. Based on a carrier dispersion effect of a silicon material, a change of an applied voltage (namely, a change of the radio frequency signal) causes a change of an effective refractive index of a silicon waveguide, and the change of the effective refractive index causes a change of phase information of an optical wave passing through the silicon waveguide, so that a phase modulation effect on an optical signal can be implemented. In addition, a carrier in the ridge region moves in a direction away from a PN junction interface under an action of the applied electric field (the direct current bias voltage), to reduce a carrier-induced absorption loss of the optical carrier in the ridge region, reduce a capacitance/resistance, and ensure the low insertion loss and the high modulation bandwidth of the device.

In a possible implementation, the first plate region and the end that is of the ridge region and that is connected to the first plate region are of the first doping type, and the second plate region and the end that is of the ridge region and that is connected to the second plate region are of the second doping type.

In this embodiment of this application, there are two different doping types in the ridge region of the first PN junction. That is, a PN junction is formed in the ridge region, to implement electro-optic modulation.

In a possible implementation, the silicon-based electro-optic phase modulator further includes an upper cladding layer stacked on the substrate, an end that is of the upper cladding layer and that is close to the substrate is connected to the optical waveguide layer, and an end that is of the upper cladding layer and that is away from the substrate is connected to the electrode layer; and the upper cladding layer includes a first metal through hole, a second metal through hole, and a third metal through hole. One end of the first metal through hole is connected to the first doped region, and the other end of the first metal through hole is connected to the first electrode. One end of the second metal through hole is connected to the end that is of the second PN junction and that is away from the first PN junction, and the other end of the second metal through hole is connected to the second electrode. One end of the third metal through hole is connected to the end that is of the second PN junction and that is close to the first PN junction, and the other end of the third metal through hole is connected to the third electrode.

In this embodiment of this application, the upper cladding layer is disposed between the optical waveguide layer and the electrode layer, so that the optical waveguide layer and the electrode layer can be electrically connected through a metal through hole at the upper cladding layer, and good ohmic contact can be generated between the optical waveguide layer and the electrode layer, to provide a simple and effective electrical connection manner.

In a possible implementation, the optical waveguide layer further includes a second doped region and a third doped region. One end of the second doped region is connected to the first doped region, and the other end of the second doped region is connected to the first PN junction. One end of the third doped region is connected to the first PN junction, and the other end of the third doped region is connected to the second PN junction. Both a carrier doping concentration in the second doped region and a carrier doping concentration in the third doped region are lower than the carrier doping concentration in the first doped region, and both the carrier doping concentration in the second doped region and the carrier doping concentration in the third doped region are higher than the carrier doping concentration in the first PN junction.

In this embodiment of this application, carrier doping concentrations in the second doped region and the third doped region each are between those in regions on two adjacent sides of each of the second doped region and the third doped region. That is, the second doped region and the third doped region are medium-concentration doped. Medium-concentration doping is used as a transition between a low-concentration doped region and a high-concentration doped region, thereby reducing an optical-field absorption loss induced by high-concentration doping in the ridge silicon optical waveguide.

In a possible implementation, a width of the third electrode is less than 10 micrometers.

In this embodiment of this application, the width of the third electrode is set to a low value, for example, less than 10 micrometers, so that the third electrode may be used as a direct current inductor in an operating process, to directly implement the function of passing the direct current and blocking the alternating current.

In a possible implementation, the silicon-based electro-optic phase modulator further includes an inductor, and the inductor is connected to the third electrode.

In this embodiment of this application, to enhance isolation of an alternating current signal from a direct current end, the third electrode may further be connected to an inductor, so as to strengthen the function of passing the direct current and blocking the alternating current.

According to a second aspect, an embodiment of this application provides a chip. The chip includes a circuit and the silicon-based electro-optic phase modulator that is provided in the first aspect and that is used in the circuit.

According to a third aspect, an embodiment of this application provides an electro-optic phase modulation system, including a direct current power supply, a plurality of antenna elements, and a plurality of silicon-based electro-optic phase modulators provided in the first aspect. Each antenna element is connected to one silicon-based electro-optic phase modulator, each antenna element is configured to output a radio frequency signal to the corresponding silicon-based electro-optic phase modulator, the direct current power supply is connected to the plurality of silicon-based electro-optic phase modulators, and the direct current power supply is configured to provide a direct current bias voltage for each silicon-based electro-optic phase modulator.

It should be understood that the chip provided in the second aspect of this application and the electro-optic phase modulation system provided in the third aspect are consistent with the technical solution in the first aspect of this application. For specific content and beneficial effects of the chip and the electro-optic phase modulation system, refer to the silicon-based electro-optic phase modulator provided in the first aspect. Details are not described herein again.

### BRIEF DESCRIPTION OF DRAWINGS

To describe technical solutions in embodiments of this application or in the background more clearly, the following describes the accompanying drawings for describing embodiments of this application or the background.
FIG. 1 is a diagram of application of a silicon-based electro-optic phase modulator in a microwave photonics system according to an embodiment of this application;
FIG. 2 is a diagram of a structure of an existing silicon-based electro-optic phase modulator according to an embodiment of this application;
FIG. 3 is a diagram of a circuit of a driving manner of an existing silicon-based electro-optic phase modulator according to an embodiment of this application;
FIG. 4 is a diagram of an electro-optic phase modulation system according to an embodiment of this application;
FIG. 5A is a schematic top view of a structure of a silicon-based electro-optic phase modulator according to an embodiment of this application;
FIG. 5B is a diagram of a cross-sectional structure of a silicon-based electro-optic phase modulator according to an embodiment of this application;
FIG. 6 is a diagram of comparison between capacitance values of two PN junctions according to an embodiment of this application;
FIG. 7 is a diagram of voltage division proportions of two PN junctions according to an embodiment of this application;
FIG. 8 is a diagram of a cross-sectional structure of another silicon-based electro-optic phase modulator according to an embodiment of this application;
FIG. 9 is a diagram of a circuit of a driving manner of a silicon-based electro-optic phase modulator according to an embodiment of this application;
FIG. 10 is a diagram of an equivalent circuit of a silicon-based electro-optic phase modulator according to an embodiment of this application;
FIG. 11 is a diagram of a cross-sectional structure of still another silicon-based electro-optic phase modulator according to an embodiment of this application; and
FIG. 12 is a schematic top view of a structure of another silicon-based electro-optic phase modulator according to an embodiment of this application.

### DESCRIPTION OF EMBODIMENTS

The following describes embodiments of this application with reference to the accompanying drawings in embodiments of this application.

In the specification, claims, and accompanying drawings of this application, the terms "first", "second", and the like are intended to distinguish between different objects but do not indicate a particular order. In addition, the terms "including" and "having" and any variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that in this application, "at least one (item)" means one or more, and "a plurality of" means two or more. "And/or" is used to describe an association relationship between associated objects, and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural.

"Embodiments" mentioned in this specification mean that specific features, structures, or characteristics described with reference to embodiments may be included in at least one embodiment of this application. The phrase shown in various positions in the specification may not necessarily mean a same embodiment, and is not an independent or optional embodiment exclusive from another embodiment. It is explicitly and implicitly understood by a person skilled in the art that embodiments described in the specification may be combined with another embodiment.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As shown in figures, both a compute device and an application that runs on the compute device may be components. One or more components may reside within a process and/or an execution thread, and the component may be located on one computer and/or distributed between two or more computers. In addition, these components may be executed from various computer-readable media that store various data structures. For example, the components may communicate by using a local and/or remote process and based on a signal having one or more data packets (for example, data from two components interacting with another component in a local system, a distributed system, and/or across a network such as an internet interacting with other systems by using the signal).

First, for ease of understanding embodiments of this application, the following specifically analyzes a technical problem that needs to be resolved in embodiments of this application and an applicable application scenario.

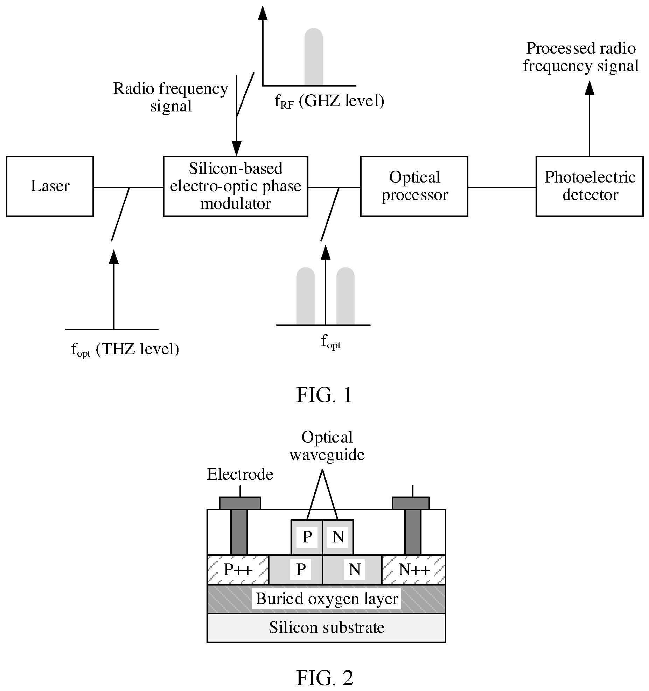

FIG. 1 is a diagram of application of a silicon-based electro-optic phase modulator in a microwave photonics system according to an embodiment of this application.

The silicon-based electro-optic phase modulator (Electro-optic phase modulator, EOPM) may modulate phase information of an optical wave, and may convert phase modulation into intensity modulation by using an optical link design. The silicon-based electro-optic phase modulator is more flexibly used, has more diversified functions, and is more widely used in the microwave photonics system. In addition, compared with a Mach-Zehnder modulator and a microring resonator modulator, the silicon-based electro-optic phase modulator does not have problems of operating point regulation and temperature sensitivity, and is more conducive to large-scale and low-cost arrayed integration application. As shown in FIG. 1, a laser may output an optical carrier (an original unmodulated optical signal). The silicon-based electro-optic phase modulator may adjust and control phase information of the optical carrier under a driving action of an input radio frequency signal, and generate an optical modulation sideband. In other words, spectrum information of the radio frequency signal is moved to an optical carrier frequency band, and input into a back-end optical processor and a photoelectric detector, so that the photoelectric detector can output a processed radio frequency signal. Therefore, performance of the silicon-based electro-optic phase modulator directly determines whether an overall function of a system can be normally implemented and a value of a performance indicator.

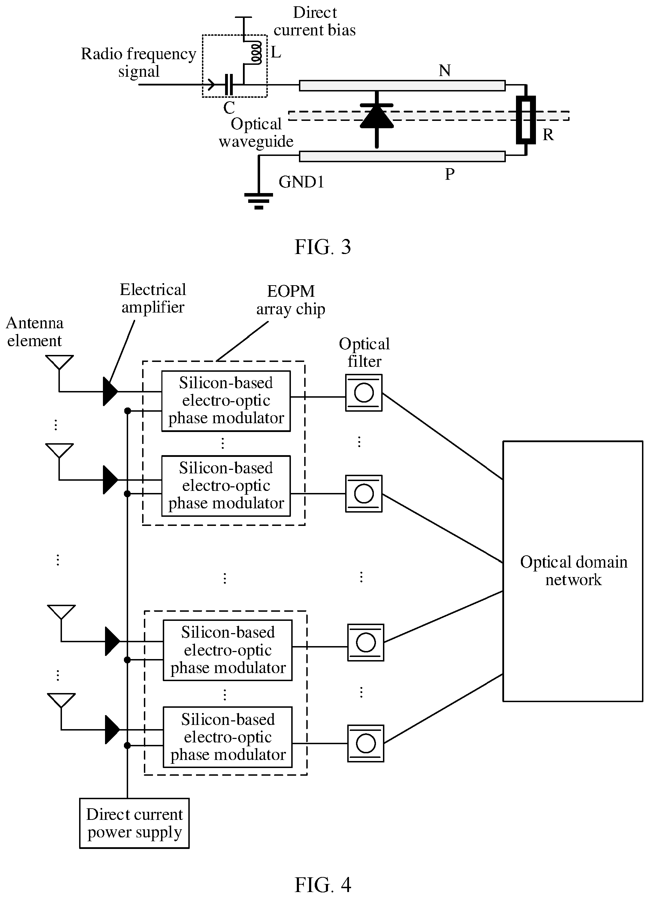

FIG. 2 is a diagram of a structure of an existing silicon-based electro-optic phase modulator according to an embodiment of this application, and FIG. 3 is a diagram of a circuit of a driving manner of an existing silicon-based electro-optic phase modulator according to an embodiment of this application.

As shown in FIG. 2, the device structure of the silicon-based electro-optic phase modulator is a cross-sectional structure cut in a direction perpendicular to a propagation direction of an optical field, and the silicon-based electro-optic phase modulator includes a single optical waveguide having an electro-optic modulation effect. That is, a PN junction is formed in the middle of a ridge optical waveguide region, for example, a P region and an N region shown in FIG. 2. A slab region, which is away from the optical waveguide, is connected to an upper-layer traveling wave electrode through a metal via, to load an input radio frequency signal. The slab region includes a P++ region and an N++ region shown in FIG. 2, and may form good ohmic contact with the metal via. It should be noted that the ridge optical waveguide region is doped with a low concentration of ions, and the doping concentration ranges from 2×10¹⁷ cm⁻³ to 5×10¹⁷ cm⁻³, inclusive. The slab region is doped with a high concentration of ions, and the doping concentration ranges from 1×10²⁰ cm⁻³ to 2×10²⁰ cm⁻³.

As shown in FIG. 3, when the silicon-based electro-optic phase modulator is in an operating state, under an action of an input voltage, a carrier concentration in a PN junction region of a silicon waveguide changes with an applied voltage, and accordingly, an effective refractive index of the silicon waveguide changes based on a carrier dispersion effect of a silicon material. In addition, an external bias-tee (Bias-Tee) is further used to combine a direct current bias voltage and the input radio frequency signal, and the direct current bias voltage and the input radio frequency signal are loaded together to a signal electrode (for example, an electrode connected to the N++ region) of the silicon-based electro-optic phase modulator, so that the PN junction (namely, the ridge optical waveguide region) is in a reverse bias state, the P region is connected to a negative electrode (for example, grounded), and the N region is connected to a positive electrode (for example, connected to a direct current bias). In this way, most carriers are pulled out of a silicon waveguide region under an action of an applied electric field, to reduce a carrier-induced absorption loss of the optical carrier, reduce a capacitance/resistance of the PN junction, and ensure a low insertion loss and a high modulation bandwidth of the silicon-based electro-optic phase modulator.

However, after the direct current bias voltage and the radio frequency signal are combined and then loaded together to a traveling wave electrode of the silicon-based electro-optic phase modulator, the direct current bias voltage drops across a termination matched resistor (for example, a resistor R shown in FIG. 3, where a resistance value of the resistor R is usually 50 ohms), and a direct current is generated. This brings static electrical power consumption to a system. For example, when a 3 V direct current bias voltage is used, about 180 mW of static power consumption is incurred.

In addition, because each silicon-based electro-optic phase modulator needs to be driven by using a separate bias-tee, in an application scenario in which a large quantity of channels of the silicon-based electro-optic phase modulator are needed, existence of the bias-tee significantly increases electrical packaging costs of the device. For example, in a wireless multiple-input multiple-output (multiple-in multiple out, MIMO) uplink receive link based on a microwave photonics technology, for a radio frequency signal received by each antenna element, one silicon-based electro-optic phase modulator is needed to convert an electrical signal into an optical frequency domain, and a quantity of antenna elements=a quantity of silicon-based electro-optic phase modulator devices=a quantity of bias-tees needed for packaging. Therefore, when an antenna scale is large, reaching 1024 channels or even more, using the driving manner shown in FIG. 3 results in high packaging costs.

In view of this, an embodiment of this application provides a silicon-based electro-optic phase modulator, to load the direct current bias voltage and the radio frequency signal on different ports, so that the direct current bias voltage drops across two ends of a PN junction diode instead of two ends of a matched resistor in an existing solution. Therefore, existence of the direct current bias voltage does not generate a quiescent current, to avoid the static power consumption. In addition, a function of passing an alternating current and blocking a direct current is implemented by using a strong capacitive characteristic of a cascaded second PN junction, so that a direct current bias function can be directly implemented on a silicon-based EOPM optical chip, and use of an external bias-tee is avoided, to reduce packaging costs of a silicon-based EOPM array integrated chip. In addition, in this embodiment of this application, processing may be performed on a current standard silicon photonics process production line without any process change, to reduce change costs. For a specific implementation of this embodiment of this application, refer to descriptions of the following related embodiments. Details are not described in this embodiment of this application.

Based on the foregoing technical problems, to facilitate understanding of embodiments of this application, the following first describes an electro-optic phase modulation system on which embodiments of this application are based.

An example in which the electro-optic phase modulation system is an uplink receive link of a wireless communication base station is used to describe a method for using a silicon-based electro-optic phase modulator in the system, a related device, and a working procedure.

FIG. 4 is a diagram of an electro-optic phase modulation system according to an embodiment of this application. As shown in FIG. 4, the electro-optic phase modulation system includes a direct current power supply, a plurality of antenna elements, and a plurality of silicon-based electro-optic phase modulators. The electro-optic phase modulation system may further include a plurality of electrical amplifiers, a plurality of optical filters, and a back-end optical domain network.

Each antenna element is connected to one silicon-based electro-optic phase modulator. In other words, the antenna element is connected to the silicon-based electro-optic phase modulator in one-to-one correspondence, and each antenna element is configured to output a radio frequency signal to the corresponding silicon-based electro-optic phase modulator. In actual application, the silicon-based electro-optic phase modulators may be integrated in parallel in an array manner. Based on a specific scale of an antenna array and a silicon photonics process capability, a quantity of needed channels is met in a slice combination manner, so that each antenna element is connected to one silicon-based electro-optic phase modulator. For example, as shown in FIG. 4, the plurality of silicon-based electro-optic phase modulators may be provided by a plurality of EOPM array chips, and each EOPM array chip includes at least two silicon-based electro-optic phase modulators. A radio frequency signal and a direct current bias voltage in the silicon-based electro-optic phase modulator are input on different ports, and the direct current bias voltage almost does not generate static power consumption, and has an extremely low requirement on a driving capability of the direct current power supply. Therefore, direct current bias power supply pins in each EOPM array chip may be jointly connected to a same direct current power supply. In other words, silicon-based electro-optic phase modulators in each EOPM array chip are powered by using the same direct current power supply. In some other embodiments, a part or all of the plurality of EOPM array chips may also use a same direct current power supply. For example, the direct current power supply shown in FIG. 4 may output direct current bias voltages to silicon-based electro-optic phase modulators in all the EOPM array chips. Compared with an existing solution, this direct current power supply manner of sharing a power supply can greatly reduce a requirement on a quantity of direct current power supply circuits, and reduce system costs.

As shown in FIG. 4, after being amplified by a corresponding electrical amplifier, an air interface radio frequency signal received by each antenna element is input into a radio frequency electrical pin of the corresponding silicon-based electro-optic phase modulator. The radio frequency electrical pin may be connected to a first electrode in the silicon-based electro-optic phase modulator.

The silicon-based electro-optic phase modulator in the EOPM array chip outputs a double-sideband modulated optical signal to a corresponding optical filter, and the optical filter reserves one of radio frequency sidebands, and filters out an optical carrier and the other radio frequency sideband. The electro-optic phase modulation system inputs, into an HBF processing network (for example, the optical domain network shown in FIG. 4) in an optical domain, each modulated optical signal that is loaded with the radio frequency signal received by each antenna element, and performs amplitude and phase adjustment and control processing, to implement a beamforming function. In addition, an optical signal processed by the optical domain network may be input into a photoelectric detector and converted into an electrical signal. The electrical signal restored by the photoelectric detector is input into a back-end intermediate radio frequency link and a baseband processing link, to complete final signal demodulation.

In addition, an embodiment of this application further provides a chip. The chip includes a circuit and the foregoing silicon-based electro-optic phase modulator used in the circuit.

Based on a structure of the electro-optic phase modulation system provided in the foregoing embodiment, the following describes one of silicon-based electro-optic phase modulators on which embodiments of this application are based.

An embodiment of this application provides a silicon-based electro-optic phase modulator. The silicon-based electro-optic phase modulator includes a substrate, and an optical waveguide layer and an electrode layer that are stacked on the substrate. The optical waveguide layer includes a first doped region, and a first PN junction and a second PN junction that are connected in series. The electrode layer includes a first electrode, a second electrode, and a third electrode. The first PN junction is of a convex structure, one end of the first PN junction is connected to the first doped region, the other end of the first PN junction is connected to the second PN junction, and a carrier doping concentration in the first PN junction is lower than a carrier doping concentration in the second PN junction, and is lower than a carrier doping concentration in the first doped region. The first doped region is connected to the first electrode, and the first electrode is configured to receive a radio frequency signal. An end that is of the second PN junction and that is away from the first PN junction is connected to the second electrode, and the second electrode is configured to be grounded. An end that is of the second PN junction and that is close to the first PN junction is connected to the third electrode, and the third electrode is configured to receive a direct current bias voltage.

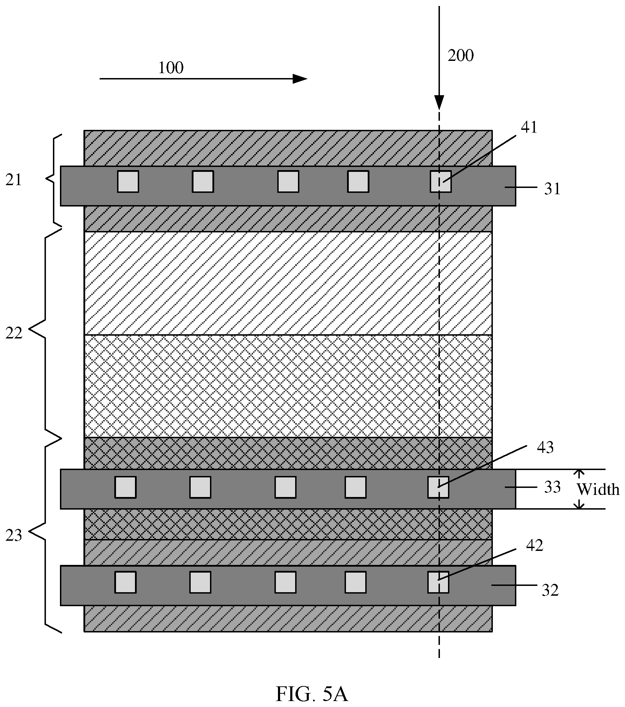

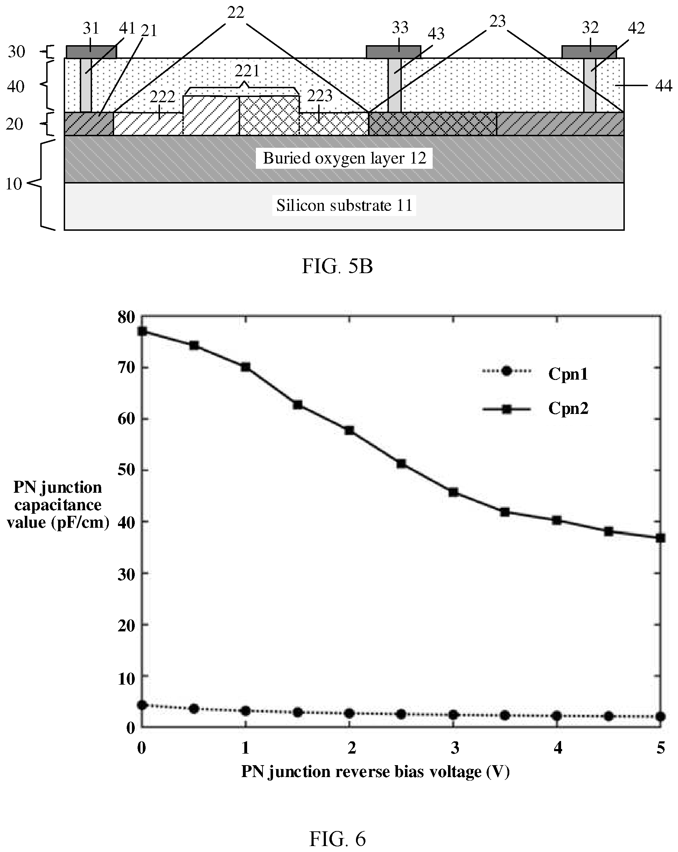

FIG. 5A is a schematic top view of a structure of a silicon-based electro-optic phase modulator according to an embodiment of this application, and FIG. 5B is a diagram of a cross-sectional structure of a silicon-based electro-optic phase modulator according to an embodiment of this application.

As shown in FIG. 5A, a direction 100 represents a propagation direction of an optical wave, and the silicon-based electro-optic phase modulator is cut along 200, to obtain the diagram of the cross-sectional structure shown in FIG. 5B. As shown in FIG. 5A, a region 22 in the silicon-based electro-optic phase modulator is a first PN junction that is used as a light-passing and electro-optic modulation region of the silicon-based electro-optic phase modulator. A region 23 is a second PN junction that does not pass light and is used solely as a diode, and a function of passing an alternating current and blocking a direct current may be implemented by using a capacitive characteristic of the second PN junction. A region 21 is a first doped region. It should be noted that an insulation medium part 44 at an upper cladding layer 40 in FIG. 5B is not shown in FIG. 5A.

Specifically, as shown in FIG. 5B, the silicon-based electro-optic phase modulator includes a substrate 10, and an optical waveguide layer 20 and an electrode layer 30 that are stacked on the substrate. The substrate 10 includes a silicon substrate 11 used for support and a buried oxygen layer 12.

The optical waveguide layer 20 includes the first doped region 21, and the first PN junction 22 and the second PN junction 23 that are connected in series. One end of the first PN junction 22 is connected to the first doped region 21, and the other end of the first PN junction 22 is connected to the second PN junction 23. In other words, the first PN junction 22 is disposed between the first doped region 21 and the second PN junction 23. A carrier doping concentration in the first PN junction 22 is lower than a carrier doping concentration in the second PN junction 23, and the carrier doping concentration in the first PN junction 22 is lower than a carrier doping concentration in the first doped region 21. For example, the first doped region 21 is a high-concentration doped region, the first PN junction 22 is a low-concentration doped convex PN junction, and the second PN junction 23 is a high-concentration doped PN junction. Low-concentration doping means that carrier doping concentrations in a P region and an N region both range from 2×10¹⁷ cm⁻³ to 5×10¹⁷ cm⁻³, and high-concentration doping means that the carrier doping concentrations in the P region and the N region both range from 1×10²⁰ cm⁻³ to 2×10²⁰ cm⁻³. This is not specifically limited in this embodiment of this application.

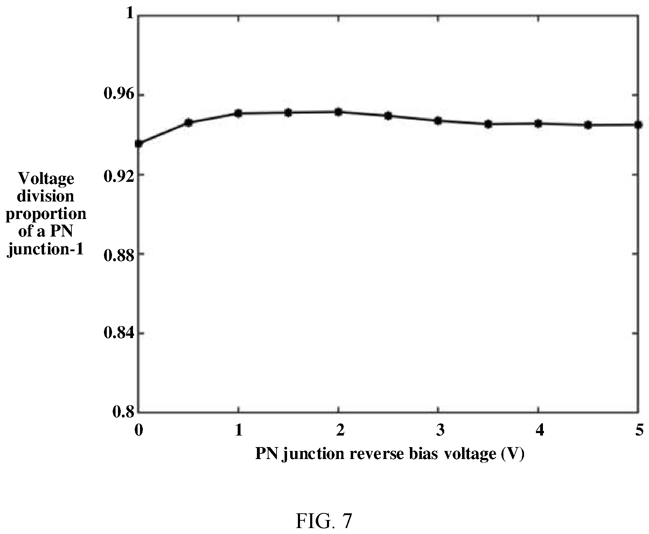

FIG. 6 is a diagram of comparison between capacitance values of two PN junctions according to an embodiment of this application, and FIG. 7 is a diagram of voltage division proportions of two PN junctions according to an embodiment of this application. As shown in FIG. 6, in a reverse bias state, a capacitance value of a high-concentration doped PN junction is far greater than a capacitance value of a low-concentration doped PN junction. In other words, a capacitance value (Cpn1) of the first PN junction is far less than a capacitance value (Cpn2) of the second PN junction under a reverse bias voltage. Therefore, as shown in FIG. 7, a voltage division proportion of a PN junction-1 (namely, the first PN junction) is greater than 92%. In other words, most of the voltage acts on the first PN junction, that is, an effective electro-optic modulation region. In this way, the first PN junction can effectively adjust and control phase information of an optical carrier under a driving action of an input radio frequency signal, and generate an optical modulation sideband.

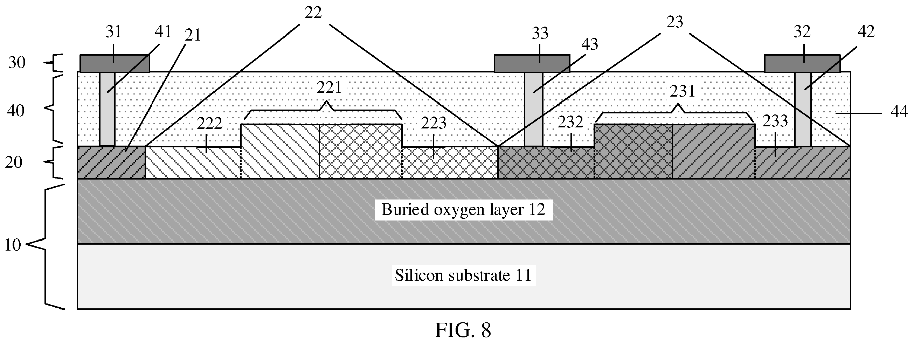

In some other embodiments, FIG. 8 is a diagram of a cross-sectional structure of another silicon-based electro-optic phase modulator according to an embodiment of this application. As shown in FIG. 8, the second PN junction 23 may alternatively be a convex PN junction. A shape of the second PN junction 23 is not specifically limited in this embodiment of this application. In addition, it should be noted that, when the second PN junction 23 is of a convex structure, the capacitance value Cpn2 corresponding to the second PN junction 23 may be much greater than the capacitance value Cpn1 corresponding to the first PN junction 22, so that the voltage division proportion of the first PN junction 22 (namely, the effective electro-optic modulation region) can be increased, and a radio frequency voltage loss can be reduced.

The electrode layer 30 includes a first electrode 31, a second electrode 32, and a third electrode 33. The first doped region 21 is connected to the first electrode 31. An end that is of the second PN junction 23 and that is away from the first PN junction 22 is connected to the second electrode 32. When the first electrode 31 is configured to receive a radio frequency signal, the second electrode 32 is configured to be grounded; or when the first electrode 31 is configured to be grounded, the second electrode 32 is configured to receive a radio frequency signal. An end that is of the second PN junction 23 and that is close to the first PN junction 22 is connected to the third electrode 33, and the third electrode 33 is configured to receive a direct current bias voltage. In this embodiment of this application and the following related embodiments, the silicon-based electro-optic phase modulator is described by using an example in which the first electrode receives the radio frequency signal and the second electrode is grounded.

As shown in FIG. 5B and FIG. 8, an electrode (for example, the third electrode) that is connected to an upper electrode layer and that is used to provide a reverse direct current bias voltage is disposed in a middle region in which the two PN junctions are connected, that is, the end that is of the second PN junction and that is close to the first PN junction, so that a carrier in the first PN junction may be pulled out of a silicon waveguide region (that is, moves in a direction away from a first PN junction interface) under an action of an applied electric field, to reduce a carrier-induced absorption loss of the optical carrier in a ridge region, reduce a capacitance/resistance, and ensure a low insertion loss and a high modulation bandwidth of the device.

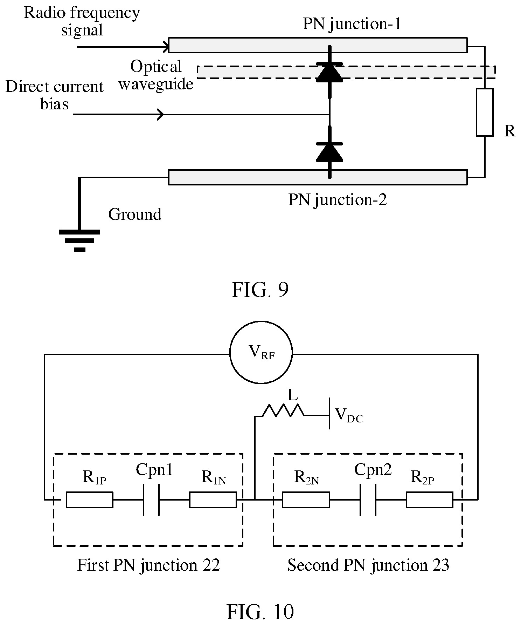

In addition, FIG. 9 is a diagram of a circuit of a driving manner of a silicon-based electro-optic phase modulator according to an embodiment of this application, and FIG. 10 is a diagram of an equivalent circuit of a silicon-based electro-optic phase modulator according to an embodiment of this application. As shown in FIG. 9, the direct current bias voltage and the radio frequency signal are input on different ports, and respectively act on two ends of a PN junction by using two different electrodes (the first electrode and the third electrode), so that the direct current bias voltage is not applied to a termination resistor R of the silicon-based electro-optic phase modulator, to greatly reduce static power consumption. The PN junction-1 (namely, the first PN junction) can effectively adjust and control the phase information of the optical carrier in an optical waveguide region under the driving action of the input radio frequency signal, and generate the optical modulation sideband. As shown in FIG. 10, in the structure of the silicon-based electro-optic phase modulator shown in FIG. 8, when a first doping type is a P type and a second doping type is an N type, according to a circuit analysis principle, under a V_{RF} action of an alternating current high-frequency signal, resistor impedance voltage division of the two PN junctions is far lower than capacitor capacitive voltage division. Therefore, a resistor R_{1P} in a P region of the first PN junction, a resistor R_{1N} in an N region of the first PN junction, a resistor R_{2N} in an N region of the second PN junction, and a resistor R_{2P} in a P region of the second PN junction may be approximately ignored. Only voltage division functions of capacitor parts Cpn1 and Cpn2 in the two PN junctions need to be considered. A PN junction-2 (namely, the second PN junction) may be used as a diode under an action of the direct current bias voltage. In addition, the function of passing the alternating current and blocking the direct current may be implemented by using a capacitive characteristic after a reverse bias voltage V_{DC} is applied to the PN junction-2, and a function of passing the direct current and blocking the alternating current may be implemented by using an inductive characteristic exhibited by a narrow metal trace of the third electrode, to directly implement a function of a bias-tee on a silicon chip. In this way, each silicon-based electro-optic phase modulator may not need to be driven by using a separate bias-tee. Therefore, the silicon-based electro-optic phase modulator provided in this embodiment of this application may be driven by using little direct current power to achieve effective electro-optic modulation.

In some embodiments, the silicon-based electro-optic phase modulator further includes an upper cladding layer stacked on the substrate. The upper cladding layer includes a first metal through hole, a second metal through hole, and a third metal through hole. In some other embodiments, the upper cladding layer further includes an insulation medium part.

As shown in FIG. 5B, the upper cladding layer 40 is disposed between the optical waveguide layer 20 and the electrode layer 30, so that the optical waveguide layer and the electrode layer can be electrically connected through a plurality of metal through holes at the upper cladding layer, and good ohmic contact can be generated between the optical waveguide layer and the electrode layer. In addition to the metal through holes, the upper cladding layer further includes the insulation medium part 44. For example, an end that is of the upper cladding layer 40 and that is close to the substrate 10 is connected to the optical waveguide layer 20, and an end that is of the upper cladding layer 40 and that is away from the substrate 10 is connected to the electrode layer 30. The upper cladding layer 40 includes a first metal through hole 41, a second metal through hole 42, and a third metal through hole 43. One end of the first metal through hole 41 is connected to the first doped region 21, and the other end of the first metal through hole 41 is connected to the first electrode 31. One end of the second metal through hole 42 is connected to the end that is of the second PN junction 23 and that is away from the first PN junction 22, and the other end of the second metal through hole 42 is connected to the second electrode 32. One end of the third metal through hole 43 is connected to the end that is of the second PN junction 23 and that is close to the first PN junction 22, and the other end of the third metal through hole 43 is connected to the third electrode 33.

In addition, it should be noted that quantities of first metal through holes 41, second metal through holes 42, and third metal through holes 43 are not specifically limited in this embodiment of this application. For example, as shown in FIG. 5A, the silicon-based electro-optic phase modulator may include a plurality of first metal through holes 41, a plurality of second metal through holes 42, and a plurality of third metal through holes 43.

It should be further noted that shapes of the first metal through hole 41, the second metal through hole 42, and the third metal through hole 43 are not specifically limited in this embodiment of this application. For example, shapes of the first metal through hole 41, the second metal through hole 42, and the third metal through hole 43 in a top view may be rectangles, squares, circles, ellipses, triangles, polygons, or the like.

It should be further noted that materials of the first metal through hole 41, the second metal through hole 42, and the third metal through hole 43 are not specifically limited in this embodiment of this application. For example, the material may be a material with good conductivity, for example, copper.

In some embodiments, the first doped region and the end that is of the first PN junction and that is close to the first doped region are of the first doping type, and the end that is of the first PN junction and that is close to the second PN junction is of the second doping type. The end that is of the second PN junction and that is close to the first PN junction is of the second doping type, and the end that is of the second PN junction and that is away from the first PN junction is of the first doping type.

The first doped region and the end that is of the first PN junction and that is close to the first doped region are of the first doping type, and the end that is of the first PN junction and that is close to the second PN junction is of the second doping type. The end that is of the second PN junction and that is close to the first PN junction is of the second doping type, and the end that is of the second PN junction and that is away from the first PN junction is of the first doping type.

When the first doping type is the P type, the second doping type is the N type; or when the first doping type is the N type, the second doping type is the P type. In this embodiment of this application, doping types of the first PN junction and a connection point with the second PN junction are the same, and doping types of the first PN junction and a connection point with the first doped region are also the same. In addition, an operating manner of the silicon-based electro-optic phase modulator in this embodiment of this application is a carrier depletion manner. To be specific, the direct current bias voltage is applied to the third electrode, so that a PN junction of the silicon-based electro-optic phase modulator is in the reverse bias state. In addition, in the reverse bias state, the first PN junction is the effective electro-optic modulation region, and the second PN junction is a diode capacitance region. Therefore, based on different types of carrier doping of a connection point of the third electrode at the optical waveguide layer, polarity of applied direct current bias voltages in this embodiment of this application is also different. For example, when the first doping type is the P type, and the second doping type is the N type, the applied direct current bias voltage is a forward bias voltage. When the first doping type is the N type, and the second doping type is the P type, the applied direct current bias voltage is a reverse bias voltage.

In some embodiments, the first PN junction includes a ridge region, a first plate region, and a second plate region. One end of the ridge region is connected to the first plate region, and the other end of the ridge region is connected to the second plate region. An end that is of the first plate region and that is away from the ridge region is connected to the first doped region, and an end that is of the second plate region and that is away from the ridge region is connected to the second PN junction.

As shown in FIG. 5B, the first PN junction 22 is of the convex structure, and a protrusion part is a ridge region 221 of the first PN junction. One end of the ridge region 221 is connected to a first plate region 222, and the other end of the ridge region 221 is connected to a second plate region 223. The ridge region 221 is a ridge silicon optical waveguide region. Based on a carrier dispersion effect of a silicon material, a change of an applied voltage (namely, a change of the radio frequency signal) causes a change of an effective refractive index of a silicon waveguide, and the change of the effective refractive index causes a change of phase information of an optical wave passing through the silicon waveguide, so that a phase modulation effect on an optical signal can be implemented. In addition, a carrier in the ridge region 221 moves in a direction away from a PN junction interface under the action of the applied electric field (the direct current bias voltage), to reduce the carrier-induced absorption loss of the optical carrier in the ridge region, reduce the capacitance/resistance, and ensure the low insertion loss and the high modulation bandwidth of the device.

In some embodiments, the first plate region and the end that is of the ridge region and that is connected to the first plate region are of the first doping type, and the second plate region and the end that is of the ridge region and that is connected to the second plate region are of the second doping type.

As shown in FIG. 5B and FIG. 8, the first plate region 222 and the end that is of the ridge region 221 and that is connected to the first plate region 222 are of the first doping type, and the second plate region 223 and the end that is of the ridge region 221 and that is connected to the second plate region 223 are of the second doping type. There are two different doping types in the ridge region 221 of the first PN junction 22, that is, a PN junction is formed in the ridge region 221, to implement electro-optic modulation.

In some other embodiments, when the second PN junction 23 shown in FIG. 8 is of the convex structure, correspondingly, the second PN junction 23 may also include a ridge region 231, a third plate region 232, and a fourth plate region 233 of the second PN junction. The third plate region 232 is disposed at one end of the ridge region 231 of the second PN junction and is connected to the second plate region 223, and the fourth plate region 233 is disposed at the other end of the ridge region 231 of the second PN junction. The end that is of the ridge region 231 of the second PN junction and that is connected to the third plate region 232 is of the second doping type, and the fourth plate region 233 and the end that is of the ridge region 231 of the second PN junction and that is connected to the fourth plate region 233 are of the first doping type.

In some embodiments, the optical waveguide layer further includes a second doped region and a third doped region. One end of the second doped region is connected to the first doped region, and the other end of the second doped region is connected to the first PN junction. One end of the third doped region is connected to the first PN junction, and the other end of the third doped region is connected to the second PN junction. Both a carrier doping concentration in the second doped region and a carrier doping concentration in the third doped region are lower than the carrier doping concentration in the first doped region, and both the carrier doping concentration in the second doped region and the carrier doping concentration in the third doped region are higher than the carrier doping concentration in the first PN junction.

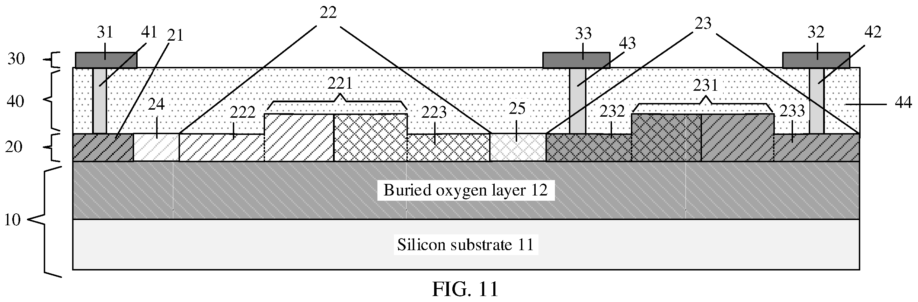

The structure shown in FIG. 8 is used as an example. FIG. 11 is a diagram of a cross-sectional structure of still another silicon-based electro-optic phase modulator according to an embodiment of this application. As shown in FIG. 11, the optical waveguide layer further includes a second doped region 24 and a third doped region 25. One end of the second doped region 24 is connected to the first doped region 21, and the other end of the second doped region 24 is connected to the first PN junction 22. One end of the third doped region 25 is connected to the first PN junction 22, and the other end of the third doped region 25 is connected to the second PN junction 23. Both a carrier doping concentration in the second doped region 24 and a carrier doping concentration in the third doped region 25 are lower than the carrier doping concentration in the first doped region 21, and both the carrier doping concentration in the second doped region 24 and the carrier doping concentration in the third doped region 25 are higher than the carrier doping concentration in the first PN junction 22.

For example, the second doped region 24 and the third doped region 25 are medium-concentration doping, and the medium-concentration doping means that a carrier doping concentration of the P type or the N type ranges from 1×10¹⁹ cm⁻³ to 5×10¹⁹ cm⁻³. In other words, carrier doping concentrations in the second doped region and the third doped region each are between those in regions on two adjacent sides of the second doped region and the third doped region. In this embodiment of this application, the medium-concentration doping is used as a transition between a low-concentration doped region and a high-concentration doped region, to reduce an optical-field absorption loss induced by the high-concentration doping in a ridge silicon optical waveguide.

In addition, it should be noted that a carrier doping type of the second doped region 24 is the first doping type, and a carrier doping type of the third doped region 25 is the second doping type.

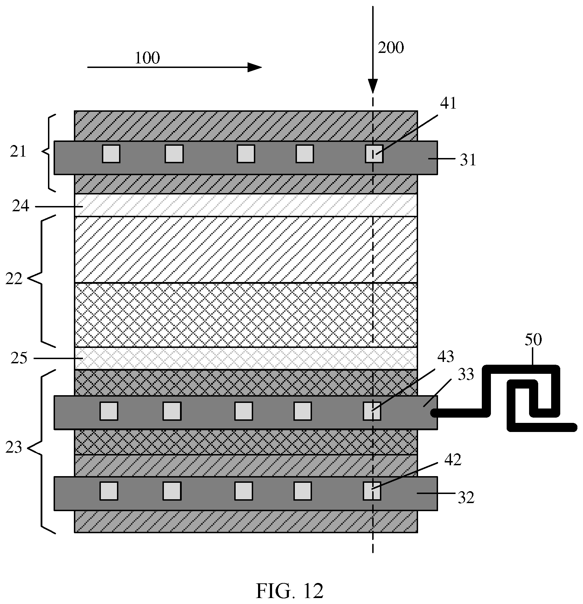

In some embodiments, a width of the third electrode is less than 10 micrometers. In this embodiment of this application, the width of the third electrode is set to a low value. For example, the width of the third electrode is set to less than 10 micrometers, so that the third electrode may be used as a direct current inductor in an operating process. In addition, the inductive characteristic exhibited by the narrow metal trace of the third electrode and the capacitive characteristic exhibited by the second PN junction after the reverse bias voltage is applied work in combination to directly implement the function of the bias-tee. In this way, each silicon-based electro-optic phase modulator does not need to be driven by using an additional separate external electrical bias-tee, to reduce packaging costs of the device. In addition, it should be noted that the width of the third electrode is a width along the direction 200 in FIG. 5A or FIG. 12, and a length of the third electrode is a length along the direction 100.

In some embodiments, the silicon-based electro-optic phase modulator further includes an inductor, and the inductor is connected to the third electrode.

The structure shown in FIG. 11 is used as an example. FIG. 12 is a schematic top view of a structure of another silicon-based electro-optic phase modulator according to an embodiment of this application. As shown in FIG. 12, to further increase a value of an inductor L and enhance isolation of an alternating current signal from a direct current end, the silicon-based electro-optic phase modulator further includes an inductor 50, and the inductor 50 is connected to the third electrode 33. It should be noted that, in a direction perpendicular to the substrate, the inductor 50 and the third electrode are located at a same layer, and the inductor 50 may further enhance the effect of blocking the alternating current signal by the direct current end. For example, as shown in FIG. 12, the inductor may be connected to an end of the third electrode. It should be noted that, a shape and a size of the inductor 50 are not specifically limited in this embodiment of this application. For example, the inductor 50 may use a metal trace of a structure similar to a spiral shape or a folded shape, to reduce the size of the inductor.

In conclusion, embodiments of this application provide a silicon-based electro-optic phase modulator, to reduce the static power consumption and the packaging costs of the EOPM device. Specifically, the silicon-based electro-optic phase modulator includes the substrate, and the optical waveguide layer and the electrode layer that are stacked on the substrate. The optical waveguide layer includes the high-concentration doped region (namely, the first doped region) and the two PN junctions that are connected in series, namely, the first PN junction and the second PN junction. One of the two PN junctions is the low-concentration doped convex PN junction (for example, the first PN junction), and the other is the high-concentration doped PN junction (for example, the second PN junction). The other end of the low-concentration doped convex PN junction is further connected to the high-concentration doped region (for example, the first doped region). Outer sides (namely, the first doped region and the end that is of the second PN junction and that is away from the first PN junction) of the two PN junctions are respectively connected to a signal electrode (for example, the first electrode) used to input the radio frequency signal and a grounded ground electrode (for example, the second electrode) at the upper electrode layer. The silicon-based electro-optic phase modulator implements input and loading of the radio frequency signal and the direct current bias voltage on different ports, and the radio frequency signal and the direct current bias voltage are isolated from each other by using a capacitor component or an inductor component, so that no mutual coupling occurs. In this way, a direct current bias function is implemented on a chip, and use of the external bias-tee is avoided. In addition, in comparison with a conventional technology, the direct current bias voltage in this embodiment of this application drops across the second PN junction diode. Because a current of the diode is very weak in a reverse bias, no electrical power consumption is generated, and a requirement on a driving capability of a direct current power supply is extremely low. Therefore, in an application requirement scenario in which a large scale of arrayed silicon-based electro-optic phase modulators need to be integrated in a system, a plurality of silicon-based electro-optic phase modulators may share the direct current power supply in a connection manner shown in FIG. 4, to reduce a scale and packaging costs of a peripheral circuit.

It should be noted that, for brief description, the foregoing method embodiments are represented as a series of actions. However, a person skilled in the art should learn that this application is not limited to the described order of the actions, because according to this application, some steps may be performed in other orders or simultaneously. In addition, a person skilled in the art should also learn that embodiments described in the specification are all example embodiments, and the involved actions and modules are not necessarily required by this application.

In the several embodiments provided in this application, it should be understood that the disclosed apparatus may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form or another form.

The foregoing units described as separate parts may or may not be physically separate, and parts displayed as units may or may not be physical units, that is, may be located in one position, or may be distributed on a plurality of network units. A part or all of the units may be selected based on actual requirements to achieve objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in a form of a software product. The computer software product is stored in a storage medium and includes several instructions for instructing a computer device (which may be a personal computer, a server, a network device, or the like, and may specifically be a processor in the computer device) to perform all or a part of the steps of the methods in embodiments of this application. The foregoing storage medium may include any medium that can store program code, such as a USB flash drive, a removable hard disk, a magnetic disk, an optical disc, a read-only memory (Read-Only Memory, ROM for short), or a random access memory (Random Access Memory, RAM for short).

The foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may still be made to a part of technical features thereof. However, these modifications or replacements do not make the essence of the corresponding technical solutions depart from the spirit and scope of the technical solutions of embodiments of this application.

## Claims

1. A silicon-based electro-optic phase modulator, wherein the silicon-based electro-optic phase modulator comprises a substrate, and an optical waveguide layer and an electrode layer that are stacked on the substrate, the optical waveguide layer comprises a first doped region, and a first PN junction and a second PN junction that are connected in series, and the electrode layer comprises a first electrode, a second electrode, and a third electrode, wherein
the first PN junction is of a convex structure, one end of the first PN junction is connected to the first doped region, the other end of the first PN junction is connected to the second PN junction, and a carrier doping concentration in the first PN junction is lower than a carrier doping concentration in the second PN junction, and is lower than a carrier doping concentration in the first doped region;
the first doped region is connected to the first electrode, and an end that is of the second PN junction and that is away from the first PN junction is connected to the second electrode, wherein the first electrode is configured to receive a radio frequency signal, and the second electrode is configured to be grounded; or the first electrode is configured to be grounded, and the second electrode is configured to receive a radio frequency signal; and
an end that is of the second PN junction and that is close to the first PN junction is connected to the third electrode, and the third electrode is configured to receive a direct current bias voltage.

2. The silicon-based electro-optic phase modulator according to claim 1, wherein
the first doped region and the end that is of the first PN junction and that is close to the first doped region are of a first doping type, and the end that is of the first PN junction and that is close to the second PN junction is of a second doping type; and
the end that is of the second PN junction and that is close to the first PN junction is of the second doping type, and the end that is of the second PN junction and that is away from the first PN junction is of the first doping type.

3. The silicon-based electro-optic phase modulator according to claim 1 or 2, wherein the first PN junction comprises a ridge region, a first plate region, and a second plate region, one end of the ridge region is connected to the first plate region, and the other end of the ridge region is connected to the second plate region; and
an end that is of the first plate region and that is away from the ridge region is connected to the first doped region, and an end that is of the second plate region and that is away from the ridge region is connected to the second PN junction.

4. The silicon-based electro-optic phase modulator according to claim 3, wherein the first plate region and the end that is of the ridge region and that is connected to the first plate region are of the first doping type; and
the second plate region and the end that is of the ridge region and that is connected to the second plate region are of the second doping type.

5. The silicon-based electro-optic phase modulator according to any one of claims 1 to 4, wherein the silicon-based electro-optic phase modulator further comprises an upper cladding layer stacked on the substrate, an end that is of the upper cladding layer and that is close to the substrate is connected to the optical waveguide layer, and an end that is of the upper cladding layer and that is away from the substrate is connected to the electrode layer; and the upper cladding layer comprises a first metal through hole, a second metal through hole, and a third metal through hole;
one end of the first metal through hole is connected to the first doped region, and the other end of the first metal through hole is connected to the first electrode;
one end of the second metal through hole is connected to the end that is of the second PN junction and that is away from the first PN junction, and the other end of the second metal through hole is connected to the second electrode; and
one end of the third metal through hole is connected to the end that is of the second PN junction and that is close to the first PN junction, and the other end of the third metal through hole is connected to the third electrode.

6. The silicon-based electro-optic phase modulator according to any one of claims 1 to 5, wherein the optical waveguide layer further comprises a second doped region and a third doped region, one end of the second doped region is connected to the first doped region, the other end of the second doped region is connected to the first PN junction, one end of the third doped region is connected to the first PN junction, and the other end of the third doped region is connected to the second PN junction; and
both a carrier doping concentration in the second doped region and a carrier doping concentration in the third doped region are lower than the carrier doping concentration in the first doped region, and both the carrier doping concentration in the second doped region and the carrier doping concentration in the third doped region are higher than the carrier doping concentration in the first PN junction.

7. The silicon-based electro-optic phase modulator according to any one of claims 1 to 6, wherein a width of the third electrode is less than 10 micrometers.

8. The silicon-based electro-optic phase modulator according to claim 7, wherein the silicon-based electro-optic phase modulator further comprises an inductor, and the inductor is connected to the third electrode.

9. A chip, comprising a circuit and the silicon-based electro-optic phase modulator according to any one of claims 1 to 8 used in the circuit.

10. An electro-optic phase modulation system, comprising a direct current power supply, a plurality of antenna elements, and a plurality of silicon-based electro-optic phase modulators according to any one of claims 1 to 8, wherein
each antenna element is connected to one silicon-based electro-optic phase modulator, each antenna element is configured to output a radio frequency signal to the corresponding silicon-based electro-optic phase modulator, the direct current power supply is connected to the plurality of silicon-based electro-optic phase modulators, and the direct current power supply is configured to provide a direct current bias voltage for each silicon-based electro-optic phase modulator.
